# EUROPEAN PATENT SPECIFICATION

(11) **EP 4 257 401 B1**
(45) Date of publication and mention of the grant of the patent: **23.09.2026**
(21) Application number: 23166915.1
(22) Date of filing: 06.04.2023
(51) Int. Cl.: B60K 17/346, B60K 17/348, B60K 17/36

(54) **IMPROVED TORQUE DISTRIBUTOR SYSTEM AMONG AXLES OF A HEAVY VEHICLE**
VERBESSERTES DREHMOMENTVERTEILUNGSSYSTEM ZWISCHEN ACHSEN EINES SCHWERLASTFAHRZEUGS
SYSTÈME DE DISTRIBUTION DE COUPLE AMÉLIORÉ ENTRE ESSIEUX DE VÉHICULE LOURD

(30) Priority: 07.04.2022 IT 202200006965
(43) Date of publication of application: 11.10.2023
(73) Proprietor: IVECO S.P.A., 10156 Torino (IT); On-Highway Brasil Ltda., 35.703-138 Sete Lagoas, Minas Gerais (BR)
(72) Inventor: PEREIRA DE LEMOS, Josè Francivaldo, 10156 Torino (IT); LOO, Wing, 35.703-138 SETE LAGOAS, MINAS GERAIS (BR)
(74) Representative: Studio Torta S.p.A.

(56) References cited:
- EP-A2- 0 179 991
- DE-A1- 102006 045 009
- US-A- 2 395 108

## Description

### TECHNICAL FIELD

The present invention relates to a torque distributor system for a heavy vehicle.

The present invention is preferably, although not exclusively, applied to the distribution of torque between axles of a heavy vehicle, such as a truck. In the following, reference will be made to such application by way of example.

### STATE OF THE PRIOR ART

As is known, heavy vehicles comprise a power assembly configured to provide torque to one or more axles of the vehicle. An example of such power assembly can be an internal combustion engine, a fuel cell engine or an electric or hybrid motor assembly.

In particular, the torque is distributed by means of a transmission to the one or more axles of the vehicle, as is known. However, such transmission is specifically designed for a single drive configuration.

Therefore, if wanting to change the drive mode from single axle or multiple axles, it is necessary to redesign the transmission.

Furthermore, the current transmissions are particularly bulky and heavy if they require having to divide the torque to a plurality of axles.

Systems known in the art are disclosed by publications US2395108 A, EP0179991 A2 or DE102006045009 A1.

Therefore, there is a felt need to provide a system for distributing the torque from a power source of a vehicle to one or more axles which is versatile, compact and cost-effective.

The object of the present invention is to satisfy the above-described needs in an optimized and cost-effective manner.

### SUMMARY OF THE INVENTION

The aforementioned object is achieved by a torque distributor system as claimed in the appended claims.

### BRIEF DESCRIPTION OF THE DRAWINGS

In order to better understand the present invention, a preferred embodiment is described in the following, by way of non-limiting example and with reference to the accompanying drawings wherein:
- Figure 1 is a schematic view of a power source system for a heavy vehicle utilized in a configuration having two drive axles;
- Figure 2 is a section view of a distributor system according to the invention in the configuration of Figure 1;
- Figure 3 is a schematic view of a power source system for a heavy vehicle utilized in a configuration having three drive axles;
- Figure 4 is a section view of a distributor system according to the invention in the configuration of Figure 3;
- Figure 5 is a schematic view of a power source system for a heavy vehicle utilized in a configuration having three drive axles; and
- Figure 6 is a section view of a distributor system according to the invention in the configuration of Figure 5.

### DETAILED DESCRIPTION OF THE INVENTION

The accompanying figures schematically illustrate a power assembly 1 configured to transmit torque through a mechanical chain to a plurality of axles 2a, 2b, 2c and 2d of a heavy vehicle (not illustrated), such as a tractor or a truck.

The power assembly 1 can be an internal combustion engine, a fuel cell system or a hybrid drive system, as known in the art.

The power assembly 1 is connected to at least one axle by means of a transmission 3, adapted to select a specific speed change, a plurality of rotating shafts 4a, 4b, 4c, 4d and a torque distributor system 5 according to the invention.

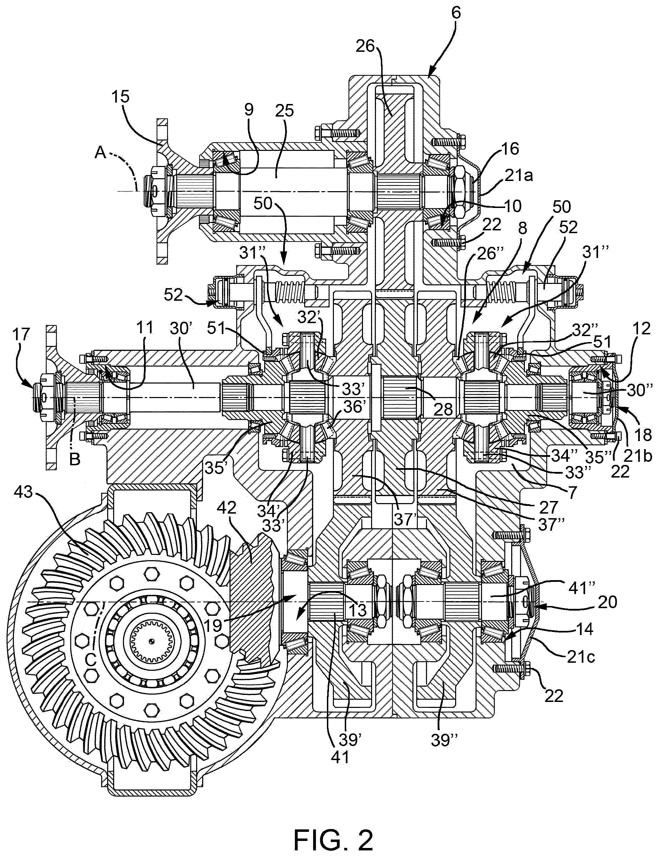

Figure 2 illustrates a configuration having two drive axles 4a, 4b where the torque distributor 5 is connected by a first rotating shaft 4a to the power assembly 1, in the described case by means of the transmission 3, and where a first axle 2a is connected by a second rotating shaft 4b.

In both embodiments, the torque distributor 5 comprises a casing 6 adapted to be supported by a fixed portion to the vehicle frame (not illustrated) defining a space 7 and a transmission assembly 8 housed inside the space 7.

Clearly, the casing 6 is advantageously built by several parts rigidly connected to each other in order to enable assembling the transmission assembly 8 in the space 7.

The casing 6 defines a plurality of openings 9, 10, 11, 12, 13, 14 configured to allow the passage of respective power take-offs 15, 16, 17, 18, 19, 20, as is better described in the following, connected to each other by the transmission 8.

More specifically, the distributor system 5 defines six openings and respective power take-offs, preferably coaxial to each other in pairs. In particular, the first and the second opening 9, 10 and the first and second power take-offs 15, 16 are coaxial to an axis A, whereas the third and the fourth opening 11, 12 and the third and fourth power take-offs 17, 18 are coaxial to an axis B and the fifth and the sixth opening 13, 14 and the fifth and sixth power take-offs 19, 20 are coaxial to an axis C.

Advantageously, the axes A, B and C are parallel to each other and even more preferably are parallel to a longitudinal axis of the vehicle.

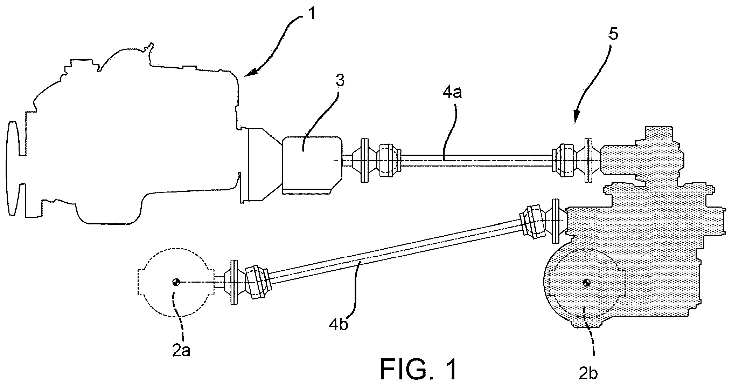

In the embodiment of Figure 2, corresponding to the use of Figure 1, where there are two drive axles, three power take-offs 15, 17, 19 communicate with the external environment, whereas three power take-offs 16, 18, 20 are separated from the external environment by means of covers 21a, 21b, 21c fixed to the casing 6 by means of connecting means 22, such as threaded elements.

In particular, in the described embodiment, the rotating shaft 4a is connected to the power take-off 15, whereas the power take-offs 17 and 19 are connected to the axle 2a and to the axle 2b respectively, as described in the following, by means of the transmission 8.

The transmission 8 comprises a first support shaft 25, rigidly connected to the first and to the second power take-off 15, 17 and advantageously coaxial to the axis A and a gear wheel 26 carried integral with the rotation by the support shaft 25.

The gear wheel 26 is configured to mesh with a gear wheel 27 carried by a second support shaft 28 advantageously integrally with the rotation. Preferably, the second support shaft 28 is coaxial to the axis B and thus parallel to the axis A.

The second support shaft 28 is advantageously connected by means of respective differential mechanisms 31', 31" to respective shafts 30', 30'' rigidly connected to the third and fourth power take-off 17, 18 and advantageously coaxial to the axis B.

In particular, each differential mechanism 31', 31" comprises a plurality of satellites 32', 32'' configured to be operatively connected to the second support shaft 28 by means of a pin 33', 33" meshing with it and adapted to support them in a rotationally free manner.

Each pin is integral with a carrier 34', 34'' configured to mesh with a first toothing 35', 35'' made on a hub integral with the shaft 30', 30'' and with a second toothing 36', 36'' advantageously made on a gear wheel 37', 37".

Advantageously, the gear wheels 37', 37" are each carried free on the shaft 28 and are operatively connected to a respective gear wheel 39', 39'' each carried by a respective third and fourth support shaft 41', 41". In particular, the third and the fourth support shaft 41', 41'' are connected to the fifth power take-off 19 and to the sixth power take-off 20 respectively.

It is highlighted that the differential mechanisms 31', 31" are placed in the space 7 on the left and right with respect to the gear wheel 27 along the axis B, in particular the gear wheels 39', 39" are placed in axial contact along the axis B with the gear wheel 27 and configured to slide relative to it.

The transmission 8 also comprises locking means 50 configured to lock the differential mechanisms 31', 31". In particular, the locking means 50 are housed in the space 7.

Very briefly, the locking means 50 comprise a sleeve 51 actuated by actuator means 52 and configured to cooperate in contact with an element of the differential mechanism 31', 31" for locking the function thereof, i.e. for making each element thereof rotate at the same speed.

In the illustrated exemplifying embodiment, the locking means 50 in both differential mechanisms comprise a movable sleeve 51 so as to assume a first condition in which it does not cooperate with the carrier 34', 34'' and a second condition in which it cooperates with the carrier 34', 34" for making it selectively integral with the toothing 35', 35" on the hub integral with the shaft 30', 30". In particular, the differential relative to the shaft 30" is maintained in a locked configuration by means of a locking screw.

The actuator means 52 illustrated herein are advantageously pneumatic, i.e. comprise a compressed air actuatable piston maintained in the unlocking position of the differential by means of elastic means, adjustable by means of a threaded mechanism, as is illustrated and not further described for the sake of brevity.

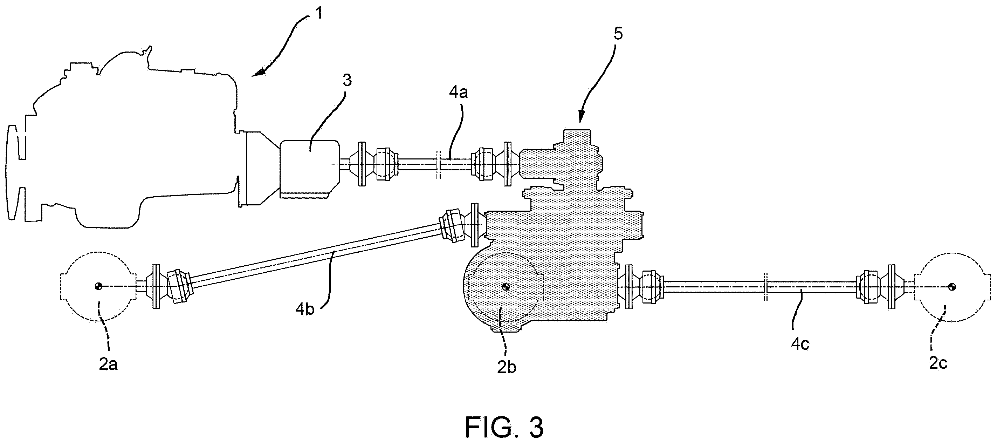

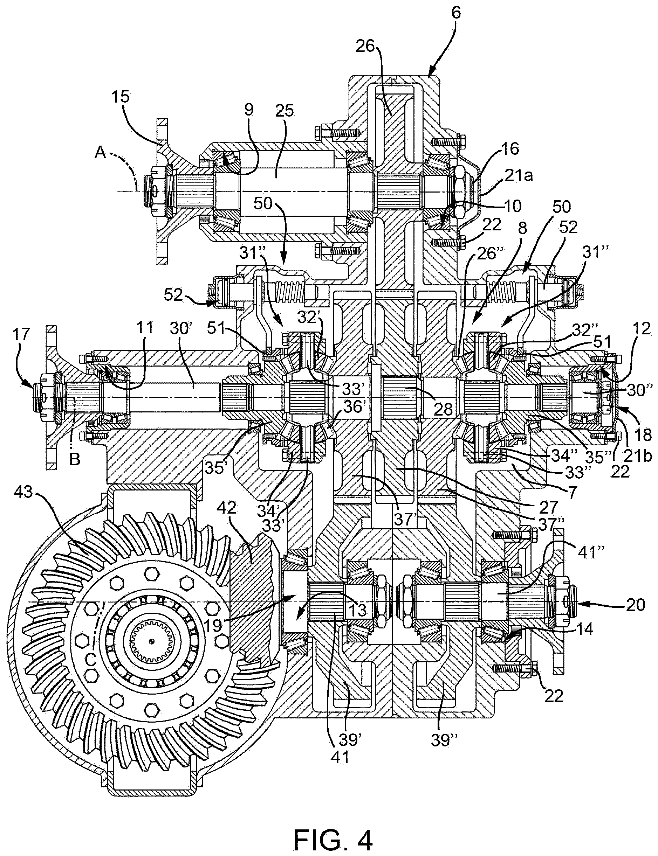

In the embodiment of Figures 3 and 4, the vehicle comprises three drive axles 2a, 2b and 2c. Consequently, with respect to the embodiment of Figures 1, 2 and 3, the sixth power take-off 20 is connected to a third rotating shaft 4c which connects the transmission 8 to the third axle 2c. The connection of the third rotating shaft 4c with the axle shafts of the third axle 2c can be made as described above for the second axle 2b.

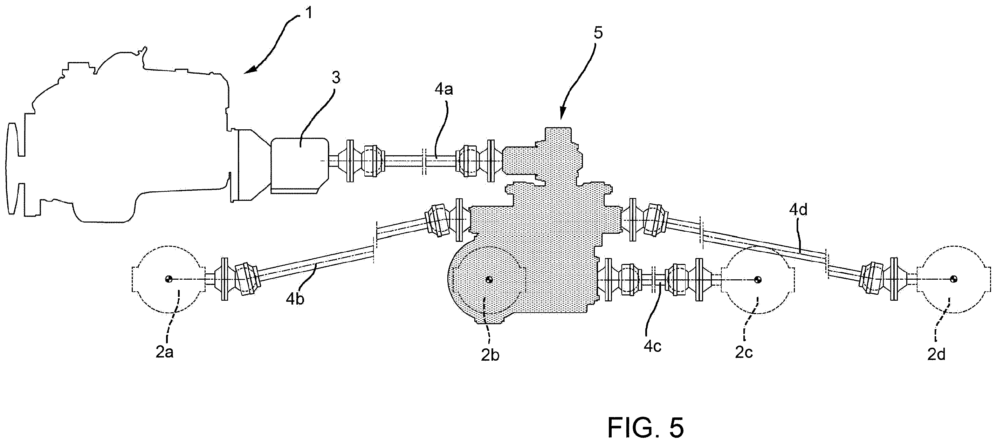

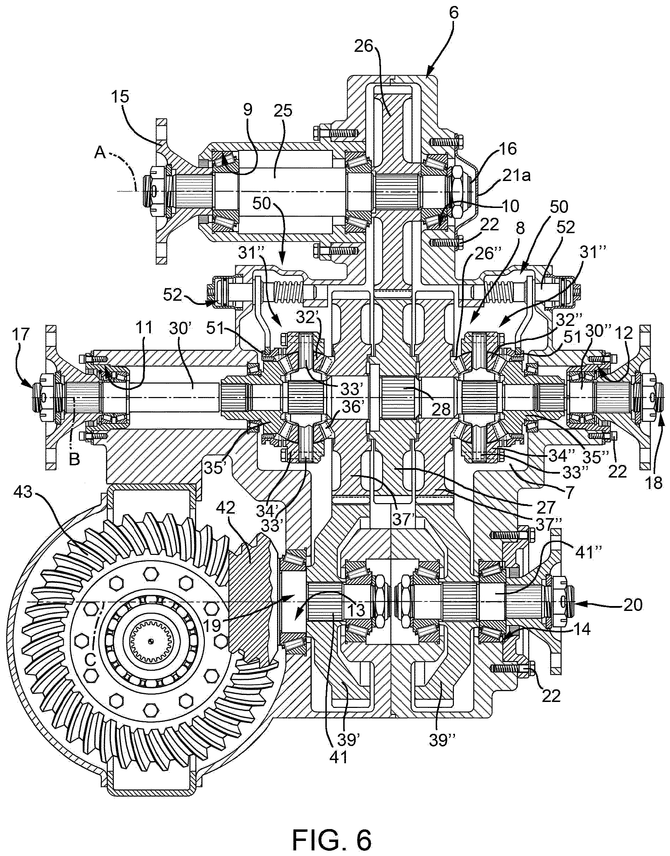

In the embodiment of Figures 5 and 6, the vehicle comprises four drive axles 2a, 2b, 2c and 2d. Consequently, with respect to the embodiment of Figures 1, 2 and 3, the sixth power take-off 20 is connected to a third rotating shaft 4c which connects the transmission 8 to the third axle 2c and the fourth power take-off 18 is connected to a fourth rotating shaft 4d which connects the transmission 8 to the fourth axle 2d. The connection of the third and fourth rotating shafts 4c, 4d with the axle shafts of the third and fourth axles 2c, 2d can be made as described above for the second axle 2b. In particular, in such configuration, both differentials are free, i.e. one is not locked by means of the screw 53 as in the preceding cases.

The wheels described in the preceding description have straight teeth and are carried by the respective shafts, as described, in a known manner for example by means of driving, bushes or other forms of connection integral with or free with respect to the rotation. Clearly, even if not expressly described, all the shafts are carried in a rotatable manner by the casing by means of rolling elements such as bearings in different mounting configurations.

The operation of the embodiment of the above-described embodiments is as follows.

In the embodiment of Figures 1 and 2, the torque generated by the power source 1 is transmitted through the rotating shaft 4a at the first power take-off 15 to the first support shaft 25. Here the torque is transferred to the gear defined by the gear wheels 26 and 27 and thus to the support shaft 28. This brings in rotation the pins 33', 33'' of the two differential mechanisms 31', 31" which bring in rotation the respective satellites 32', 32'' which by means of the carriers 34', 34'' drive the gear wheels 35', 35", 36', 36". The gear wheels 35', 35" are integral with the shafts 30', 30'' which bring in rotation the third and fourth power take-off 17, 18 integral with them. The gear wheels 36', 36'' drive the gear wheels 37', 37'' which, in turn, meshing with the gear wheels 39', 39'' drive the respective shafts 41', 41" integral with the fifth and sixth power take-offs 19, 20 respectively. It should be noted that, in the present case, the second, fourth and sixth power take-off 16, 18, 20 rotate idle and protected by the respective covers 21a, 21b, whereas the third power take-off 17 is connected by means of the second rotating shaft 4b to the first axle 2a which results driving and the fifth power take-off 19 is connected by means of the gear wheel 42 and the toothing 43 to the axle 2b.

In the embodiment of Figures 3 and 4, the sixth power take-off 20 is connected by means of the third rotating shaft 4c to a third drive axle 2c and the torque is provided according to what described in the foregoing. The operation is otherwise similar to what described relative to Figures 2 and 3.

In the embodiment of Figures 5 and 6, in addition to what described with respect to Figures 3 and 4, the fourth power take-off 18 is connected by means of the fourth rotating shaft 4d to a fourth drive axle 2d and the torque is provided according to what described in the foregoing. The operation is otherwise similar to what described relative to Figures 2 and 3.

In all the embodiments, if necessary, the locking means 50 can be activated for locking the available carrier 31', 31" and thus make the gear wheel 37' and the shaft 30' and/or the shaft 30" and the gear wheel 37" turn at the same speed.

In all the above-described operations, the second power take-off can be utilized for providing torque to an element of the vehicle adapted to utilize it for different purposes or to provide it, such as an electric car or any mechanical or hydraulic user.

In all the embodiments, part of the torque can be utilized connecting the second power take-off to a system utilizing the vehicle torque for other aims.

Based on the foregoing, the advantages of a torque distributor system according to the invention are evident.

The proposed distributor system allows the distribution in a versatile manner to different axles of a vehicle enabling obtaining, with the same system, different vehicle configurations of drive axles.

Therefore, the distributor system according to the invention is particularly versatile, i.e. is suitable for a large variety of purposes reducing the manufacturing costs and allowing a high customization of the vehicle.

Furthermore, the fact that the transmission is housed inside a single space and the fact that the power take-offs can be isolated when they are not used, increases the useful life of the transmission.

The use of one or more differentials further allows having axles with equal traction utilizable in the conditions required by specific loading and/or ground situations.

Furthermore, the particular arrangement of the reducer stage interposed between two differentials allows obtaining a high transmission jump in a reduced space.

The presence of a power take-off utilizable for other aims with respect to those of traction makes the distributor assembly even more versatile.

Finally, it is clear that modifications and variations can be made to the torque distributor system according to the present invention which however do not depart from the scope of protection defined by the claims.

Clearly, further mechanical elements not described for the sake of brevity can be provided.

The reduction module and the differential mechanisms or the locking means could comprise elements of different shape.

Similarly, the arrangement of the power take-offs could vary and further reduction stages between each other could be provided.

Clearly, although gear wheels having straight teeth have been described, different types of gear wheels and of teeth could be present. Still, further constructive elements omitted from the description and schematized in the drawings for the sake of brevity, could be present so as to enable the correct mounting of shafts and gear wheels.

## Claims

1. Torque distributor system (5) for distributing the torque coming from a power source (1) of a vehicle to a plurality of axles (2a, 2b, 2c, 2d) of said vehicle,
said distributor system (5) comprising a casing (6) configured to define a space (7) configured to house a transmission (8), said casing (6) defining a plurality of openings (9, 10, 11, 12, 13, 14) configured to house respective power take-offs (15, 16, 17, 18, 19, 20) connected to each other by said transmission (8), a first power take-off (15) of said power take-offs (15, 16, 17, 18, 19, 20) being connectable to said power source (1) and at least a second (19) of said power take-offs (15, 16, 17, 18, 19, 20) being connectable to one or more of said axles (2a, 2b, 2c, 2d), at least one (17, 18) of said power take-offs (15, 16, 17, 18, 19, 20) being connected by means of a gear between two gear wheels (26, 27) to said first power take-off (15), at least one other (19, 20) of said power take-offs (15, 16, 17, 18, 19, 20) being connected by means of said gear and respective differential mechanisms (31', 31") to said first power take-off (15),
**characterized in that** said transmission (8) comprises a first support shaft (25) integral with said first power take-off (15), a first gear wheel (26) carried integrally with the rotation by said first support shaft (25) and a second gear wheel (27) meshing with said first gear wheel (26) and carried integrally with the rotation by a second support shaft (28), said transmission (8) comprising a first and a second differential mechanism (31', 31") interposed between said second support shaft (28) and respectively a third power take-off (15) and a fourth power take-off (16),
wherein said first differential mechanism (31') is further interposed to a fifth power take-off (19) and said second differential mechanism (31") is further interposed to a sixth power take-off (20) .

2. System according to claim 1, wherein each differential mechanism (31', 31") comprises a plurality of pins (33', 33") which define toothing meshing with said support shaft (28), said pins (33', 33") being connected to each other by a carrier (34', 34") and supporting a plurality of satellites (32', 32") in a rotationally free way.

3. System according to claim 2, wherein each differential mechanism (31', 31") comprises a first gear wheel (35', 35") integral with a respective shaft (30', 30") each rigidly connected respectively to the third and fourth power take-off (17, 18), said first gear wheel (35', 35") meshing with said satellites (32', 32").

4. System according to claim 3, wherein a second gear wheel (36', 36") of said differential mechanisms (31', 31") meshes with said satellites (32', 32"), said transmission (8) comprising a pair of third gear wheels (37', 37") each integral with a respective one of said second gear wheel (36', 36"), said third gear wheels (27) being supported in a rotationally free way by said second support shaft (28).

5. System according to claim 4, wherein said second gear wheel (36', 36") of said differential mechanisms (31', 31'') is a toothing made on the respective third gear wheel (37', 37").

6. System according to claim 4 or 5, wherein said third gear wheels (37', 37") are each operatively interposed to said fifth and said sixth power take-offs (19, 20).

7. System according to claim 6, wherein said transmission (8) comprises a shaft (41') integral with said fifth power take-off (19) and a shaft (41") integral with said sixth power take-off (20), said transmission (8) comprising respective fourth gear wheels (39', 39") integral with said shafts (41', 41") and each configured to mesh with said third gear wheels (37', 37").

8. System according to one of the preceding claims, wherein said second support shaft (28) is parallel to said first support shaft (25).

9. System according to one of claims 7 or 8, wherein said shafts (41', 41"), said second and said first support shaft (28, 25) are parallel to each other.

10. System according to any of the preceding claims, wherein said second gear wheel (27) is axially interposed between said differential mechanisms (31', 31").

11. System according to one of claims 4 to 10, wherein said second gear wheel (27) is axially comprised between said third gear wheels (37', 37") which in turn are axially comprised by the respective differential mechanism (31', 31").

12. System according to one of the preceding claims, wherein said transmission (8) comprises locking means (50) to lock said differential mechanisms (31', 31").

13. System according to Claim 12, wherein said locking means (50) comprise a sleeve (51) and actuator means (52) configured to move said sleeve (51) so as to make said carrier (34") of said each differential mechanism (31', 31") integral with one of said gear wheels (35', 35") of each differential mechanism (31', 31").

14. System according to one of the preceding claims, wherein the remaining power take-offs being isolated from the external environment by covers (21a, 21b, 21c, 21d) carried by said casing (6).

15. Vehicle comprising a power source (1) capable of generating torque, a plurality of axles (2a, 2b, 2c, 2d) and a torque distributor (5) operatively interposed between said power source (1) and said axles (2a, 2b, 2c, 2d), said torque distributor (5) being made according to one of the preceding claims.

## Patentansprüche

1. Drehmomentverteilersystem (5) zum Verteilen des Drehmoments, das von einer Leistungsquelle (1) eines Fahrzeugs stammt, auf eine Vielzahl von Achsen (2a, 2b, 2c, 2d) des Fahrzeugs,
wobei das Verteilersystem (5) ein Gehäuse (6) umfasst, das konfiguriert ist, um einen Raum (7) zu begrenzen, der konfiguriert ist, um ein Getriebe (8) aufzunehmen, wobei das Gehäuse (6) eine Vielzahl von Öffnungen (9, 10, 11, 12, 13, 14) definiert, die konfiguriert sind, um jeweilige Nebenabtriebe (15, 16, 17, 18, 19, 20) aufzunehmen, die durch das Getriebe (8) miteinander verbunden sind, wobei ein erster Nebenabtrieb (15) der Nebenabtriebe (15, 16, 17, 18, 19, 20) mit der Leistungsquelle (1) verbindbar ist und mindestens ein zweiter (19) der Nebenabtriebe (15, 16, 17, 18, 19, 20) mit einer oder mehreren der Achsen (2a, 2b, 2c, 2d) verbindbar ist, wobei mindestens einer (17, 18) der Nebenabtriebe (15, 16, 17, 18, 19, 20) mittels eines Getriebes zwischen zwei Zahnrädern (26, 27) mit dem ersten Nebenabtrieb (15) verbunden ist, wobei mindestens ein anderer (19, 20) der Nebenabtriebe (15, 16, 17, 18, 19, 20) mittels des Getriebes und jeweiliger Differentialmechanismen (31', 31") mit dem ersten Nebenabtrieb (15) verbunden ist,
**dadurch gekennzeichnet, dass** das Getriebe (8) eine erste Trägerwelle (25), die integral mit dem ersten Nebenabtrieb (15) ist, ein erstes Zahnrad (26), das integral mit der Drehung durch die erste Trägerwelle (25) getragen wird, und ein zweites Zahnrad (27), das mit dem ersten Zahnrad (26) kämmt und integral mit der Drehung durch eine zweite Trägerwelle (28) getragen wird, umfasst, wobei das Getriebe (8) einen ersten und einen zweiten Differentialmechanismus (31', 31") umfasst, die zwischen der zweiten Trägerwelle (28) und jeweils einem dritten Nebenabtrieb (15) und einem vierten Nebenabtrieb (16) angeordnet sind,
wobei der erste Differentialmechanismus (31') ferner an einem fünften Nebenabtrieb (19) angeordnet ist und der zweite Differentialmechanismus (31") ferner an einem sechsten Nebenabtrieb (20) angeordnet ist.

2. System nach Anspruch 1, wobei jeder Differentialmechanismus (31', 31") eine Vielzahl von Stiften (33', 33") umfasst, die eine Verzahnung definieren, die mit der Trägerwelle (28) kämmt, wobei die Stifte (33', 33") durch einen Träger (34', 34") miteinander verbunden sind und eine Vielzahl von Satelliten (32', 32") frei drehend tragen.

3. System nach Anspruch 2, wobei jeder Differentialmechanismus (31', 31") ein erstes Zahnrad (35', 35") umfasst, das integral mit einer jeweiligen Welle (30', 30") ist, die jeweils starr mit dem dritten und vierten Nebenabtrieb (17, 18) verbunden ist, wobei das erste Zahnrad (35', 35") mit den Satelliten (32', 32") kämmt.

4. System nach Anspruch 3, wobei ein zweites Zahnrad (36', 36") der Differentialmechanismen (31', 31") mit den Satelliten (32', 32") kämmt, wobei das Getriebe (8) ein Paar dritter Zahnräder (37', 37") umfasst, die jeweils integral mit einem jeweiligen der zweiten Zahnräder (36', 36") sind, wobei die dritten Zahnräder (27) frei drehend durch die zweite Trägerwelle (28) getragen werden.

5. System nach Anspruch 4, wobei das zweite Zahnrad (36', 36") der Differentialmechanismen (31', 31") eine Verzahnung ist, die an dem jeweiligen dritten Zahnrad (37', 37") ausgebildet ist.

6. System nach Anspruch 4 oder 5, wobei die dritten Zahnräder (37', 37") jeweils operativ an dem fünften und dem sechsten Nebenabtrieb (19, 20) angeordnet sind.

7. System nach Anspruch 6, wobei das Getriebe (8) eine Welle (41'), die integral mit dem fünften Nebenabtrieb (19) ist, und eine Welle (41"), die integral mit dem sechsten Nebenabtrieb (20) ist, umfasst, wobei das Getriebe (8) jeweilige vierte Zahnräder (39', 39") umfasst, die integral mit den Wellen (41', 41") sind und jeweils konfiguriert sind, um mit den dritten Zahnrädern (37', 37") zu kämmen.

8. System nach einem der vorhergehenden Ansprüche, wobei die zweite Trägerwelle (28) parallel zu der ersten Stützwelle (25) ist.

9. System nach einem der Ansprüche 7 oder 8, wobei die Wellen (41', 41"), die zweite und die erste Trägerwelle (28, 25) parallel zueinander stehen.

10. System nach einem der vorhergehenden Ansprüche, wobei das zweite Zahnrad (27) axial zwischen den Differentialmechanismen (31', 31") angeordnet ist.

11. System nach einem der Ansprüche 4 bis 10, wobei das zweite Zahnrad (27) axial zwischen den dritten Zahnrädern (37', 37") enthalten ist, die ihrerseits axial durch den jeweiligen Differentialmechanismus (31', 31") umfasst sind.

12. System nach einem der vorhergehenden Ansprüche, wobei das Getriebe (8) Verriegelungsmittel (50) zum Blockieren der Differentialmechanismen (31', 31") umfasst.

13. System nach Anspruch 12, wobei die Verriegelungsmittel (50) eine Hülse (51) und Betätigungsmittel (52) umfassen, die konfiguriert sind, um die Hülse (51) zu bewegen, um den Träger (34") jedes Differentialmechanismus (31', 31") integral mit einem der Zahnräder (35', 35") jedes Differentialmechanismus (31', 31") zu machen.

14. System nach einem der vorhergehenden Ansprüche, wobei die verbleibenden Nebenabtriebe durch Abdeckungen (21a, 21b, 21c, 21d), die von dem Gehäuse (6) getragen werden, von der äußeren Umgebung isoliert sind.

15. Fahrzeug, umfassend eine Leistungsquelle (1), die in der Lage ist, Drehmoment zu erzeugen, eine Vielzahl von Achsen (2a, 2b, 2c, 2d) und einen Drehmomentverteiler (5), der operativ zwischen der Leistungsquelle (1) und den Achsen (2a, 2b, 2c, 2d) angeordnet ist, wobei der Drehmomentverteiler (5) nach einem der vorhergehenden Ansprüche hergestellt ist.

## Revendications

1. Système distributeur de couple (5) destiné à distribuer le couple provenant d'une source d'alimentation (1) d'un véhicule vers une pluralité d'essieux (2a, 2b, 2c, 2d) dudit véhicule,
ledit système distributeur (5) comprenant un carter (6) configuré pour définir un espace (7) configuré pour loger une transmission (8), ledit carter (6) définissant une pluralité d'ouvertures (9, 10, 11, 12, 13, 14) configurées pour loger des prises d'alimentation (15, 16, 17, 18, 19, 20) respectives reliées entre elles par ladite transmission (8), une première prise d'alimentation (15) parmi lesdites prises d'alimentation (15, 16, 17, 18, 19, 20) pouvant être reliée à ladite source d'alimentation (1) et au moins une seconde (19) parmi lesdites prises d'alimentation (15, 16, 17, 18, 19, 20) pouvant être reliée à un ou plusieurs desdits essieux (2a, 2b, 2c, 2d), au moins une (17, 18) parmi lesdites prises d'alimentation (15, 16, 17, 18, 19, 20) étant reliée au moyen d'un engrenage entre deux roues d'engrenage (26, 27) à ladite première prise d'alimentation (15), au moins une autre (19, 20) parmi lesdites prises d'alimentation (15, 16, 17, 18, 19, 20) étant reliée au moyen dudit engrenage et de mécanismes différentiels (31', 31") respectifs à ladite première prise d'alimentation (15),
**caractérisé en ce que** ladite transmission (8) comprend un premier arbre support (25) solidaire de ladite première prise d'alimentation (15), une première roue d'engrenage (26) étant portée solidairement par la rotation dudit premier arbre support (25) et une seconde roue d'engrenage (27) venant en prise avec ladite première roue d'engrenage (26) et étant portée solidairement par la rotation d'un second arbre support (28), ladite transmission (8) comprenant un premier et un second mécanismes différentiels (31', 31") interposés entre ledit second arbre support (28) et respectivement une troisième prise d'alimentation (15) et une quatrième prise d'alimentation (16),
dans lequel ledit premier mécanisme différentiel (31') est en outre interposé à une cinquième prise d'alimentation (19) et ledit second mécanisme différentiel (31") est en outre interposé à une sixième prise d'alimentation (20).

2. Système selon la revendication 1, dans lequel chaque mécanisme différentiel (31', 31") comprend une pluralité de goupilles (33', 33") qui définissent une denture venant en prise avec ledit arbre support (28), lesdites goupilles (33', 33") étant reliées entre elles par un porte-satellites (34', 34") et supportant une pluralité de satellites (32', 32") d'une manière libre en rotation.

3. Système selon la revendication 2, dans lequel chaque mécanisme différentiel (31', 31") comprend une première roue d'engrenage (35', 35") solidaire d'un arbre (30', 30") respectif, chacune étant reliée respectivement de manière rigide aux troisième et quatrième prises d'alimentation (17, 18), ladite première roue d'engrenage (35', 35") venant en prise avec lesdits satellites (32', 32").

4. Système selon la revendication 3, dans lequel une deuxième roue d'engrenage (36', 36") desdits mécanismes différentiels (31', 31") vient en prise avec lesdits satellites (32', 32"), ladite transmission (8) comprenant une paire de troisièmes roues d'engrenage (37', 37"), chacune étant solidaire d'une roue respective parmi ladite deuxième roue d'engrenage (36', 36"), lesdites troisièmes roues d'engrenage (27) étant supportées d'une manière libre en rotation par ledit second arbre support (28).

5. Système selon la revendication 4, dans lequel ladite deuxième roue d'engrenage (36', 36") desdits mécanismes différentiels (31', 31") est une denture réalisée sur la troisième roue d'engrenage (37', 37") respective.

6. Système selon la revendication 4 ou 5, dans lequel lesdites troisièmes roues d'engrenage (37', 37") sont chacune interposées de manière opérationnelle à ladite cinquième et à ladite sixième prises d'alimentation (19, 20).

7. Système selon la revendication 6, dans lequel ladite transmission (8) comprend un arbre (41') solidaire de ladite cinquième prise d'alimentation (19) et un arbre (41") solidaire de ladite sixième prise d'alimentation (20), ladite transmission (8) comprenant des quatrièmes roues d'engrenage (39', 39") respectives solidaires desdits arbres (41', 41") et chacune étant configurée pour venir en prise avec lesdites troisièmes roues d'engrenage (37', 37").

8. Système selon l'une des revendications précédentes, dans lequel ledit second arbre support (28) est parallèle audit premier arbre support (25).

9. Système selon l'une des revendications 7 ou 8, dans lequel lesdits arbres (41', 41"), ledit second et ledit premier arbres support (28, 25) sont parallèles l'un à l'autre.

10. Système selon l'une quelconque des revendications précédentes, dans lequel ladite deuxième roue d'engrenage (27) est interposée axialement entre lesdits mécanismes différentiels (31', 31").

11. Système selon l'une des revendications 4 à 10, dans lequel ladite deuxième roue d'engrenage (27) est comprise axialement entre lesdites troisièmes roues d'engrenage (37', 37") qui sont à leur tour comprises axialement par le mécanisme différentiel (31', 31") respectif.

12. Système selon l'une des revendications précédentes, dans lequel ladite transmission (8) comprend des moyens de verrouillage (50) pour verrouiller lesdits mécanismes différentiels (31', 31").

13. Système selon la revendication 12, dans lequel lesdits moyens de verrouillage (50) comprennent un manchon (51) et un moyen d'actionnement (52) configuré pour déplacer ledit manchon (51) de manière à rendre ledit porte-satellites (34") de chaque mécanisme différentiel (31', 31") solidaire de l'une desdites roues d'engrenage (35', 35") de chaque mécanisme différentiel (31', 31").

14. Système selon l'une des revendications précédentes, dans lequel les prises d'alimentation restantes sont isolées de l'environnement extérieur par des capots (21a, 21b, 21c, 21d) portés par ledit carter (6) .

15. Véhicule comprenant une source d'alimentation (1) capable de générer un couple, une pluralité d'essieux (2a, 2b, 2c, 2d) et un distributeur de couple (5) interposé de manière opérationnelle entre ladite source d'alimentation (1) et lesdits essieux (2a, 2b, 2c, 2d), ledit distributeur de couple (5) étant réalisé selon l'une des revendications précédentes.
